**Europäisches Patentamt**

**European Patent Office**

**Office européen des brevets**

(11) Veröffentlichungsnummer: **0 230 877**

**A2**

# EUROPÄISCHE PATENTANMELDUNG

(21) Anmeldenummer: **87100125.1**

(22) Anmeldetag: **08.01.87**

(51) Int. Cl.³: **B 23 Q 16/10**

(30) Priorität: 22.01.86 DE 3601717
11.12.86 DE 3642294

(43) Veröffentlichungstag der Anmeldung:
05.08.87 Patentblatt 87/32

(84) Benannte Vertragsstaaten:
AT DE FR GB IT

(71) Anmelder: Buchmeier, Heinz
Halstenbeker Weg 46a
D-2000 Hamburg 54(DE)

(72) Erfinder: Buchmeier, Heinz
Halstenbeker Weg 46a
D-2000 Hamburg 54(DE)

(74) Vertreter: Engelhardt, Guido, Dipl.-Ing.
Montafonstrasse 35 Postfach 1350
D-7990 Friedrichshafen 1(DE)

(54) Winkelschaltbare Baueinheit für Werkzeugmaschinen.

(57) Bei einer winkelschaltbaren Baueinheit (1) für Werkzeugmaschinen mit einem stationären Teil (11) und einem verdrehbaren Teil (21) zur Halterung von Werkstücken oder Werkzeugen (3), einem Antriebsmotor (31) mit nachgeschaltetem Getriebe (34) sowie einem Kupplungsglied (41), das drehfest und axial verschiebbar mit dem Stator (33) verbunden und zur Indexierung des verdrehbaren Teils (21) auf beiden Sirnseiten mit Stirnverzahnungen (44, 45) versehen und mittels dem zur Verriegelung der Baueinheit (1) das stationäre Teil (11) mit dem verdrehbaren Teil (21) formschlüssig verbindbar ist, ist um das Kupplungsglied (41) ein mit den einzelnen Schaltstellungen der Baueinheit (1) zugeordneten Ausnehmungen (52) versehenes Steuerglied (51) drehbar gelagert, das in beiden Drehrichtungen mit dem verdrehbaren Teil (21) gekoppelt ist. Des weiteren ist ein durch eines der Getriebeteile (40) steuerbarer Schalthebel (60) vorgesehen, der mit einem doppelseitigen umsteuerbaren Klinkengesperre (61) zusammenwirkt, mittels dem das Steuerglied (51) zur Änderung einer Schaltstellung wechselweise in einer Drehrichtung mit dem Kupplungsglied (41) verbindbar ist.

Auf diese Weise ist es möglich, das verdrehbare Teil (21) mittels des Antriebsmotors (31) in zwei Drehrichtungen ohne zusätzliche Schaltmittel zu verstellen, so daß eine einzunehmende Arbeitsstellung auf dem kürzesten Verdrehweg anfahrbar ist und die Schalt zeiten kurz sind.

./...

EP 0 230 877 A2

FIG. 1

DIPL.-ING. GUIDO ENGELHARDT   PATENTANWALT
7990 Friedrichshafen 0230877

Heinz Buchmeier
2000 Hamburg 54

Winkelschaltbare Baueinheit für Werkzeugmaschinen

Die Erfindung bezieht sich auf eine winkelschaltbare Baueinheit für Werkzeugmaschinen, insbesondere auf einen Rundschalttisch oder einen Revolverkopf, und besteht aus einem an der Werkzeugmaschine angebrachten stationären Teil und einem auf diesem angeordneten verdrehbaren Teil zur Halterung von Werkstücken oder Werkzeugen, einem Antriebsmotor mit einem nachgeschalteten, vorzugsweise als Planetenraddifferential ausgebildeten Getriebe sowie einem Kupplungsglied, das drehfest und axial verschiebbar mit dem Stator des Antriebsmotors verbunden und zur Indexierung des verdrehbaren Teils auf beiden Stirnseiten mit Stirnverzahnungen versehen und mittels dem zur Verriegelung der Baueinheit das stationäre Teil mit dem verdrehbaren Teil formschlüssig verbindbar ist.

Eine Einrichtung dieser Art ist durch die DE-OS 31 04 683 bekannt. Das bewegliche Teil ist bei dieser Ausgestaltung, da die zugeordnete Verriegelung nicht lösbar ist, jedoch nur in einer Drehrichtung antreibbar. Ein Drehrichtungswechsel ist, wie auch bei anderen aufwendigen

./.

Antriebssystemen für Revolverköpfe und Rundschalttische somit, ohne daß weitere aufwendige Antriebsmittel in Form von Elektromagneten oder dgl. vorgesehen werden, nicht möglich. Auf kürzestem Wege kann demnach die Baueinheit nicht in eine neue Arbeitsposition verdreht werden, vielmehr ist diese jeweils nur durch ein Verstellen des verdrehbaren Teils gegenüber dem stationären Teil in einer Richtung einzunehmen. Und da mehr als die Hälfte der ansteuerbaren Arbeitspositionen eines Revolverkopfes um mehr als 180° von der Ausgangsstellung entfernt sind, sind die notwendigen Schaltzeiten mitunter erheblich.

Aufgabe der Erfindung ist es daher, die winkelschaltbare Baueinheit für Werkzeugmaschinen der eingangs genannten Gattung in der Weise auszubilden, daß der verdrehbare Teil mittels des vorgesehenen Antriebsmotors in zwei Drehrichtungen gegenüber dem stationären Teil auf einfache mechanische Weise, ohne daß weitere Schaltmittel erforderlich sind, verstellt werden kann, so daß eine einzunehmende Arbeitsstellung des Schalttisches jeweils auf dem kürzesten Verdrehweg anfahrbar ist und die Schaltzeiten somit teilweise in einem erheblichen Maße zu reduzieren sind. Der dazu erforderliche Bauaufwand soll gering gehalten werden, dennoch soll eine hohe Funktionssicherheit bei einem störungsfreien Betrieb über einen langen Zeitraum gewährleistet sein.

Gemäß der Erfindung wird dies dadurch erreicht, daß um das Kupplungsglied ein mit den einzelnen Schaltstellungen der Baueinheit zugeordneten Ausnehmungen versehenes Steuerglied drehbar gelagert ist, das in beiden Drehrichtungen mit dem verdrehbaren Teil gekoppelt ist, und daß ein durch eines der Getriebeteile des Getriebes steuerbarer Schalthebel vorgesehen ist, der mit einem doppelseitigen umsteuerbaren Klinkengesperre

./.

zusammenwirkt, mittels dem das Steuerglied und/oder das verdrehbare Teil zur Änderung einer Schaltstellung wechselweise jeweils in einer Drehrichtung mit dem Kupplungsglied trieblich verbindbar sind.

Zweckmäßig ist es hierbei, den Schalthebel drehfest an einer verschwenkbar in dem stationären Teil, vorzugsweise in einer in dieses eingearbeiteten Freisparung gelagerten Schaltwelle anzubringen und diesen durch an der dem Kupplungsglied zugekehrten Stirnfläche des mit diesem kuppelbaren Getriebeteils angebrachte, den Schaltstellungen zugeorndete, vorzugsweise mit rechteckigen Flanken versehenen Kuppelzähnen zu betätigen.

Das Klinkengesperre ist in einfacher Ausgestaltung durch zwei parallel zueinander angeordnete, jeweils durch die Kraft einer, vorzugsweise in ihrer Stärke gleich stark bemessenen Feder radial verschiebbar und mit ihren Hinterschneidungen in die Ausnehmungend es Steuergliedes einführbare Sperrklinken zu bilden, die in Aussparungen des Kupplungsgliedes geführt und durch die Schaltwelle arretierbar sind.

Zur Arretierung der Sperrklinken ist es hierbei angebracht, die Schaltwelle mit beispielsweise durch eine Freisparung gebildeten Anschlagflächen zu versehen, an denen die Sperrklinken jeweils mittels an diesen angeformter Haken abgestützt sind und die auf die Sperrklinken einwirkenden Federn mit ihrem an dem stationären Teil abgestützten Ende einzeln oder gemeinsam in einem Gleitschuh zu halten.

Ferner ist es angezeigt, den in die Kuppelzähne des Getriebeteils eingreifenden Teil des Schalthebels in seiner Länge derart zu bemessen, daß dieser bei einer Mittelstellung zwischen zwei Kuppelzähnen außer Eingriff mit dem Getriebeteil verschwenkbar ist und mit einem dessen Nullage anzeigenden Signalgeber auszustatten.

Vorteilhaft ist es ferner, das Steuerglied über eine
an dem Kupplungsglied, beispielsweise durch eine angeformte Schulter oder dgl. gebildete Anschlagfläche mit
diesem in einer Verstellrichtung abzustützen.

Zur verdrehfesten Verbindung des verdrehbaren Teils
mit dem Steuergliedes können in einfacher Ausgestaltung
in dieses vorzugsweise gleichmäßig über den Umfang verteilt angeordnete radial gerichtete Stifte eingesetzt
werden, wobei es angezeigt ist, zur Rückführung des
Kupplungsgliedes mittels des an diesem abgestützten
Steuergliedes durch eine Drehbewegung des verdrehbaren
Teils die die Stifte aufnehmenden Ausnehmungen des Steuergliedes beidseitig mit in Umfangsrichtung geneigten
Auflaufschrägen zu versehen.

Des weiteren sollten die Auflaufschrägen der Ausnehmungen
des Steuergliedes in entsprechender Weise ausgebildet sein
wie die zusammenwirkenden Stirnverzahnungen des Kupplungsgliedes, des stationären Teils und des verdrehbaren Teils.

Zur Überwachung ist es ferner angebracht, den stationären
Teil mit einem Signalaufnehmer und den verdrehbaren
Teil mit einem mit diesem zusammenwirkenden Signalgeber
zu versehen.

Die gemäß der Erfindung ausgebildete winkelschaltbare
Baueinheit für Werkzeugmaschinen ist nicht nur einfach
in der konstruktiven Ausgestaltung und somit auf wirtschaftliche Weise herstellbar, sondern auch betriebssicher
und ermöglicht es vor allem, eine neu einzunehmende
Arbeitsstellung mittels des vorhandenen Antriebsmotors
auf dem jeweils kürzesten Verdrehweg anzufahren. Durch
die erfindungsgemäße Ausgestaltung kann nämlich die
Verriegelung des stationären Teils mit dem verdrehbaren
Teil über das Kupplungsglied in beiden Drehrichtungen

./.

mittels des Steuergliedes gelöst werden, der verdrehbare Teil der Baueinheit kann demnach, je nach Drehrichtung des Antriebsmotors, verstellt und in kurzer Zeit in eine neue Position gebracht werden. Die Schaltzeiten sind somit mitunter in einem erheblichen Maße gegenüber den vorbekannten Einrichtungen vergleichbarer Art zu reduzieren. Und da nur wenige mechanische Bauteile erforderlich sind, um dies zu bewerkstelligen, und diese Bauteile außerdem nicht in die Kraftübertragung mit einbezogen werden müssen, ist eine hohe Funktionssicherheit und demnach ein störungsfreier Betrieb der erfindungsgemäßen Baueinheit bei langer Lebensdauer und kompakter Bauweise gegeben.

In der Zeichnung ist ein Ausführungsbeispiel der gemäß der Erfindung ausgebildeten winkelschaltbaren Baueinheit für Werkzeugmaschinen dargestellt, das nachfolgend im einzelnen erläutert ist. Hierbei zeigt:

Figur 1   die Baueinheit, eingebaut in einen Revolverkopf, in einem Längsschnitt,

Figur 2   einen Schnitt nach der Linie II - II der Figur 1,

Figur 3   einen Schnitt nach der Linie III - III der Figur 1,

Figur 4   eine Abwicklung in Ansicht des Pfeiles P in verriegeltem Zustand,

Figur 5   die Abwicklung gemäß Figur 4 im entriegelten Zustand   und

Figur 6   die Baueinheit nach den Figuren 1 bis 5, eingebaut in einen Rundschalttisch.

./.

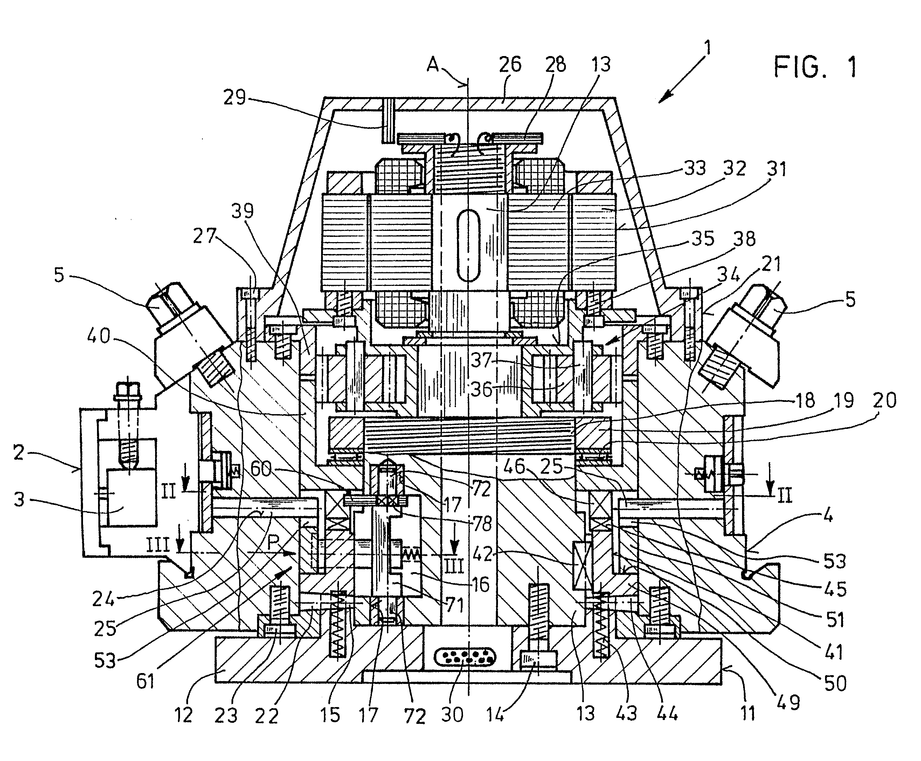

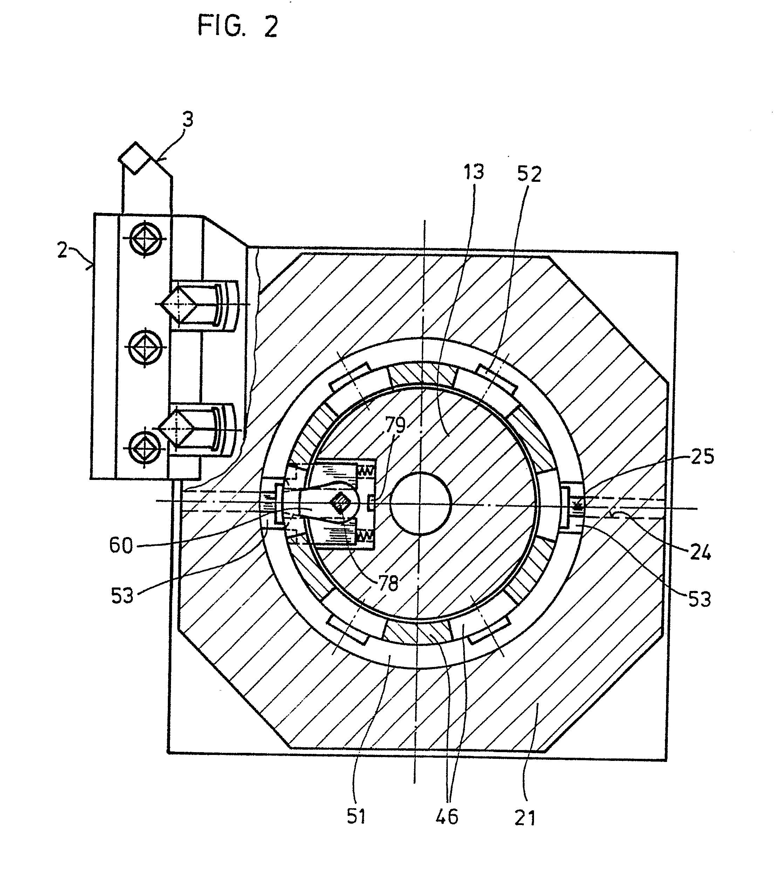

Die in den Zeichnungen dargestellte und in Figur 1 mit 1 bezeichnete Baueinheit dient zur lagegenauen Positionierung von Werkstücken oder Werkzeugen an einer Werkzeugmaschine, beispielsweise von, wie dies in den Figuren 1 und 2 dargestellt ist, in einem auswechselbar angebrachten Stahlhalter 2 eingesetzten Drehstählen 3. Mittels der Baueinheit 1 wird durch Verdrehen um deren Längsachse A ein vorher an dieser befestigter Drehstahl, der in eine der Führungen 4 eingesetzt und mittels Schrauben 5 festgespannt ist, in eine vorgesehene Arbeitsstellung gebracht.

Die Baueinheit 1 besteht aus einem stationären Teil 11, das an der Werkzeugmaschine befestigt ist, und einem gegenüber diesem in beiden Drehrichtungen verdrehbaren Teil 21. Dazu dient als Antriebsmotor ein als umsteuerbarer Außenläufer ausgebildeter Elektromotor 31, dessen Stator 32 auf einer Säule 13 angebracht ist, die mittels Schrauben 14 fest mit der Grundplatte verbunden ist. Der Rotor 33 des Antriebsmotors 31 ist dagegen mittels Schrauben 38 mit einem Planetenradträger 35 eines Planetenradgetriebes 34, das als nachgeschaltetes Differentialgetriebe wirksam ist, gekoppelt, über das das verdrehbare Teil 21 angetrieben werden kann. Dazu ist ein Hohlrad 40 vorgesehen, dem die Antriebsenergie von dem Rotor 33 über die auf Bolzen 37 verdrehbar in dem Planetenradträger 35 gelagerten Planetenräder 36 zugeführt wird. Mit den Planetenrädern 36 ist ein weiteres Hohlrad 39 ständig in Eingriff.

Zur Verriegelung des stationären Teils 11 mit dem verdrehbaren Teil 21 dient ein Kupplungsglied 41, das mittels einer Paßfeder 42 drehfest aber axial verschiebbar an der Säule 13 angebracht ist. Mittels sich an der Grundplatte 12 abstützender Druckfedern 43 wird die axiale Verschiebung des Kupplungsgliedes 41 bewerkstelligt.

./.

Auf den beiden Stirnseiten ist das Kupplungsglied 41 mit Stirnverzahnungen 44 und 45 versehen; mittels der Stirnverzahnung 44 ist hierbei ein an der Grundplatte 12 angebrachter Zahnkranz 15 mit einem mittels Schrauben 23 an dem verdrehbaren Teil 21 befestigter Stirnzahnkranz 22 miteinander verbindbar, die Stirnverzahnung 45 wirkt dagegen mit einer Stirnverzahnung 46 zusammen, die an dem mittels einem auf ein Gewinde 18 der Säule 13 aufgeschraubten Gewinderinges 19 und eines Drucklagers 20 gesicherten Hohlrad 40 auf der zugekehrten Seite angebracht ist. Die Flanken der Stirnverzahnung 46 sind annähernd rechtwinklig ausgebildet, so daß bei Eingriff der Stirnverzahnung 45 des Kupplungsgliedes 40 in diese Selbsthemmung gegeben ist.

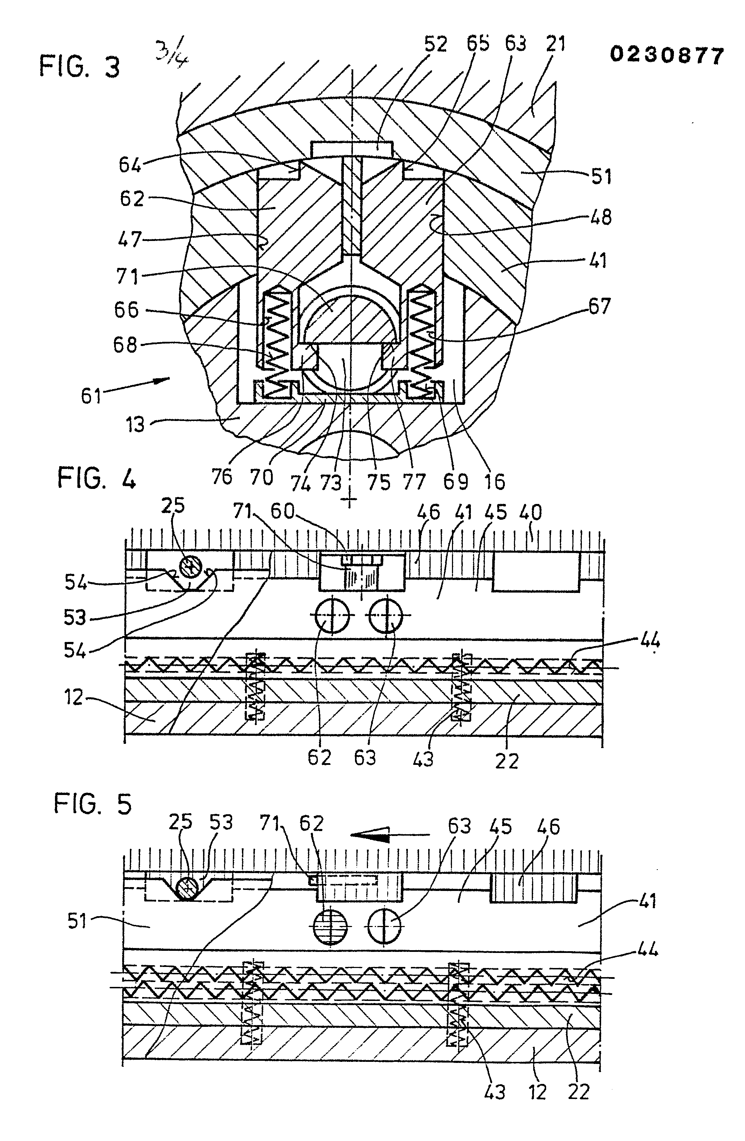

Um das Kupplungsglied 41 ist ein gegenüber diesem frei drehbares Steuerglied 51 angeordnet, das mit dem verdrehbaren Teil 21 in Triebverbindung steht. Dazu dienen Mitnahmestifte 25, die in radial gerichteten Bohrungen 24 des verdrehbaren Teils 21 eingesetzt sind und mit ihren inneren Enden in Ausnehmungen 53 eingreifen, die in das Steuerglied 51 eingearbeitet sind. Die Ausnehmungen 53 sind hierbei, wie dies den Figuren 4 und 5 entnommen werden kann, keilförmig gestaltet und somit mit Auflaufschrägen 54 versehen, um eine Rückführung des Kupplungsgliedes 41, das mit einer dem Steuerglied 51 zugeordneten und durch eine umlaufende Schulter 49 ausgebildeten Anschlagfläche 50 ausgebildet ist, zu ermöglichen.

Ferner weist das Steuerglied 51 eine Vielzahl von Ausnehmungen 52 in Form von Rechtecknuten auf, die der Anzahl der vorgesehenen Schaltstellungen der Baueinheit 1 entsprechen. Und mit den Ausnehmungen 52 wirkt ein umsteuerbares Klinkengesperre 61 zusammen, mittels dem das Steuerglied 51 in beiden Drehrichtungen des Antriebsmotors 31 drehfest aber auch lösbar mit dem Kupplungsglied
41 verbunden werden kann. Es ist aber auch möglich - dies
ist allerdings nicht dargestellt -,mittels des Klinkengesperres 61 das Kupplungsglied 41 unmittelbar mit dem verdrehbaren Teil 21 der Baueinheit 1 zu verbinden, indem die
Sperrklinken 62 und 63 durch das Steuerglied 51 hindurchgeführt sind und wechselweise unmittelbar in in das verdrehbare Teil 21 eingearbeitete Ausnehmungen einrasten.

Das Klinkengesperre 61 ist in einer Aussparung 16 der
Säule 13 eingesetzt und besteht, wie dies insbesondere
der Figur 3 entnommen werden kann, aus zwei in in das
Kupplungsteil 41 eingearbeitete Ausnehmungen 47 und 48
radial durch die Kraft von in Bohrungen 66 und 67 eingesetzten Druckfedern 68 und 69 verschiebbaren Sperrklinken
62 und 63, die mit spiegelbildlich zueinander angeordneten
Hinterschneidungen 64 bzw. 65 versehen sind. Die freien
Enden der Federn 68 und 69, die zusammen mit dem Kupplungsglied 41 höhenverstlelbar sind, sind in einem Gleitschuh 70
gehalten.

Zur wechselseitigen Betätigung der beiden Sperrklinken 62
und 63 dient eine Schaltwelle 71, die mittels Zapfen 72
in Bohrungen 17 der Säule 13 gehalten ist. Zu diesem
Zweck ist in die Schaltwelle 71 eine Freisparung 73 eingearbeitet, so daß Anschlagflächen 74 und 75 gebildet sind,
an denen die Sperrklinken 62 und 63 mittels angeformter
Haken 76 und 77 durch die Kraft der Druckfedern 68 und 69
anliegen. Und zur Verdrehung der Schaltwelle 71 ist ein
Schalthebel 60 vorgesehen, der mittels eines Mehrkantes 78
drehfest auf dieser angebracht ist und in die Verzahnungen
46 des Hohlrades 40 eingreift.

Im verriegelten Zustand der Baueinheit 1 ragt der Schalthebel 60, wie dies in Figur 2 dargestellt ist, zwischen
die Stirnverzahnungen 46 des Hohlrades 40 hinein, der Schalthebel 60 kann jedoch, da sein dem Hohlrad 40 zugekehrtes Ende entsprechend bemessen ist, frei aus der
Mittellage heraus aus der Verzahnung 46 geschwenkt werden.
In diesem Betriebszustand rotiert der Planetenradträger 35,
so daß dieser durch den Rotor 32 des Antriebsmotors 31
angetrieben wird. Die Planetenräder 36 wälzen sich in
den Hohlrädern 39 und 40 ab. Das mit dem verdrehbaren
Teil 21 fest verbundene Hohlrad 39 steht dabei jedoch
still. Da die Zähnezahlen der Hohlräder 39 und 40 unterschiedlich sind - das Hohlrad 40 weist eine geringfügig
größere Zähnezahl auf als das Hohlrad 39 - , wird das
Hohlrad 40 in gleichem Sinne wie der Rotor 32 angetrieben.
Die Stirnverzahnung 46 gleitet dabei über die Stirnverzahnung 45, und zwar so lange, bis die Verzahnungen 45
und 46 in Eingriffsstellung sind und durch die Kraft
der Druckfedern 43 einrasten können. Damit ist das Hohlrad
40, da das Kupplungsglied 41 an der Säule 13 drehfest
abgestützt ist, blockiert. Das Hohlrad 39 kann sich nunmehr
aber frei drehen, da der Stirnzahnkranz 22 und das mit
diesem verbundene verdrehbare Teil 21 durch das Kupplungsglied 41 nicht mehr arretiert sind.

Zu Beginn der Verdrehung des verdrehbaren Teils 21 wurde
durch die Verzahnung 46 des Hohlrades 40 der Schalthebel 60
in dessen Drehrichtung ausgelenkt und somit die Schaltwelle
71 verdreht, so daß eine der Sperrklinken 62 oder 63
je nach Drehrichtung blockiert ist. Die andere Sperrklinke
ist dagegen in eine der Ausnehmungen 52 des Steuergliedes
51 eingefallen.

Das verdrehbare Teil 21 wird nunmehr im entgegengesetzten
Drehsinn des Rotors 32 angetrieben, da das Hohlrad 39, wie
bereits erwähnt, eine geringere Zähnezahl als das Hohlrad
40 aufweist. Ein an dem mittels Schrauben 27 an dem verdrehbaren Teil 21 angebrachten Deckel 26 befestigter
Signalgeber 29 wird somit ebenfalls verdreht und löst
bei einem an der Säule 13 angebrachten Signalaufnehmer 28

./.

dessen Position erreicht ist, ein Signal aus. In diesem Betriebszustand wird der Rotor 32 des Antriebsmotors 31 durch die elektrische Steuerung der Werkzeugmaschine umgepolt. Nachdem durch die Justierung des Signalaufnehmers 28 das verdrehbare Teil 21 die eigentliche einzunehmende Position um die halbe Teilung der Stirnverzahnungen des Stirnzahnkranzes 32 überschritten hatte. Eine der Sperrklinken 62, 63 ist in die betreffende Ausnehmung 52 eingefallen, so daß das Steuerglied 51 gegen eine Rückdrehung gesperrt ist. Da das drehbare Teil 21 aber noch um die halbe Zahnteilung rückwärts drehen kann, wird durch die Mitnahmestifte 25 über die Auflaufschrägen 54 das Steuerglied 51 und damit das Kupplungsglied 41 zurück nach unten verschoben. Mit dem drehbaren Teil 21 ist somit auch das Hohlrad 39 blockiert, das Hohlrad 40 dreht sich dagegen so lange, bis der Schalthebel 60 zwischen die Verzahnung 46 des Hohlrades 40 wieder in seine Nullage einfallen kann. Mittels eines Signalaufnehmers 79 wird dies registriert und der Rotor 32 des Antriebsmotors 31 wird stillgesetzt. Über einen Stecker 30 werden die elektrischen Signale von der Baueinheit 1 abgenommen.

Bei entsprechender elektrischer Anwahl kann der drehbare Teil 21 im umgekehrten Sinn entriegelt werden, umlaufen und erneut verriegelt werden.

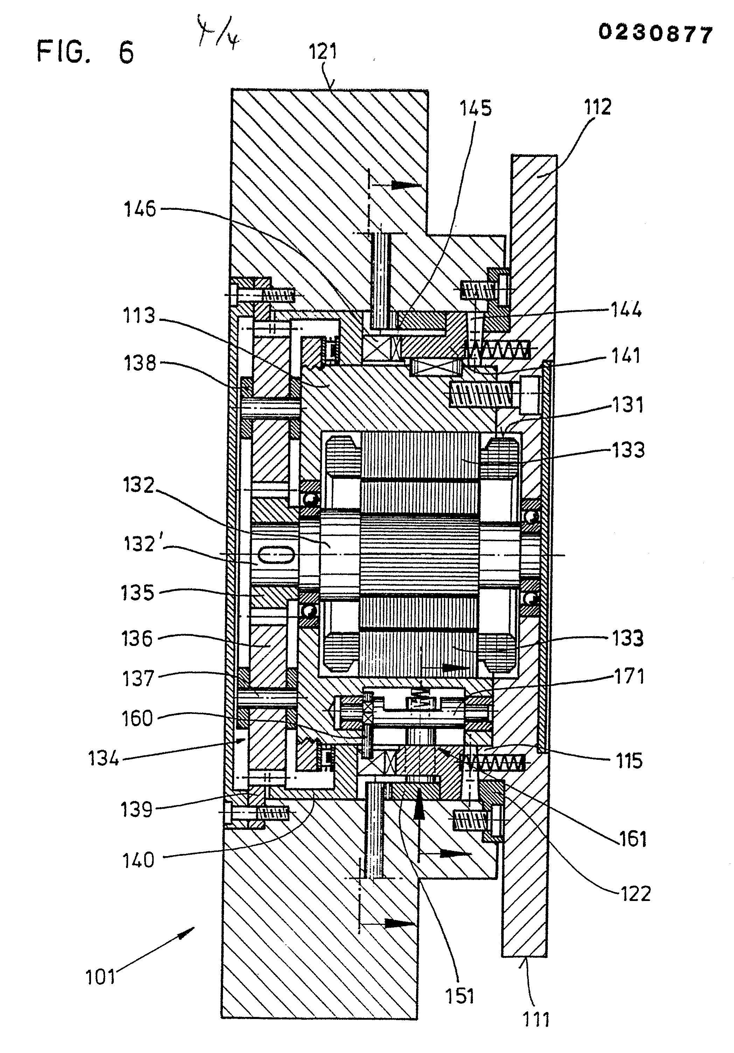

Die in Figur 6 dargestellte Baueinheit 101 ist in gleicher Weise aufgebaut und wirksam. Die Antriebsenergie des hierbei als Innenläufer ausgebildeten Antriebsmotors 131 wird hierbei von dessen Rotor 132 auf ein auf der Rotorwelle 132' angeordnetes Sonnenrad 135 eines Planetenradgetriebes 134 übertragen, das über in einem Planetenradträger 138 gehaltenen Wellen 137 drehbar gelagerten Planetenrädern 136 mit Hohlrädern 139 und 140 in Triebverbindung steht. Der Stator 133 des Antriebsmotors 131 ist wiederum an einer mit einer Grundplatte 112 verbundenen Säule 113 des stationären Teils 111 angebracht.

./.

Mittels des mit 161 bezeichneten Klinkengesperres ist das Kupplungsglied 141 mit dem mit dem verdrehbaren Teil 121 gekuppelten Steuerglied 151 in gleicher Weise verbindbar. Auch wirkt das Kupplungsglied 141 über die Stirnverzahnungen 144 und 145 mit dem Stirnzahnkranz 135 der Grundplatte 111 und dem Stirnzahnkranz 122 des verdrehbaren Teils 121 bzw. mit der Stirnverzahnung 146 des Hohlrades 140 zusammen.

Zur Betätigung des Klinkengesperres 161 dient wiederum ein Schalthebel 160, der auf einer Schaltwelle 171 drehfest angeordnet und der durch die Stirnverzahnung 146 des Hohlrades 140 verschwenkbar ist.

5. Dezember 1986   e-1
A 7891

Heinz Buchmeier
2000 Hamburg 54

P a t e n t a n s p r ü c h e :

1. Winkelschaltbare Baueinheit für Werkzeugmaschinen, insbesondere Rundschalttisch oder Revolverkopf, mit einem an der Werkzeugmaschine angebrachten stationären Teil und einem auf diesem angeordneten verdrehbaren Teil zur Halterung von Werkstücken oder Werkzeugen, einem Antriebsmotor mit einem nachgeschalteten, vorzugsweise als Planetenraddifferential ausgebildeten Getriebe sowie einem Kupplungsglied, das drehfest und axial verschiebbar mit dem Stator des Antriebsmotors verbunden und zur Indexierung des verdrehbaren Teils auf beiden Stirnseiten mit Stirnverzahnungen versehen und mittels dem zur Verriegelung der Baueinheit das stationäre Teil mit dem verdrehbaren Teil formschlüssig verbindbar ist,

./.

d a d u r c h   g e k e n n z e i c h n e t ,

daß um das Kupplungsglied (41, 141) ein mit den einzelnen Schaltstellungen der Baueinheit (1) zugeordneten Ausnehmungen (52) versehenes Steuerglied (51, 151) drehbar gelagert ist, das in beiden Drehrichtungen mit dem verdrehbaren Teil (21, 121) gekoppelt ist, und daß ein durch eines der Getriebeteile (Hohlrad 40, 140) des Getriebes (34, 134) steuerbarer Schalthebel (60, 160) vorgesehen ist, der mit einem doppelseitigen umsteuerbaren Klinkengesperre (61, 161) zusammenwirkt, mittels dem das Steuerglied (51, 151) und/oder das verdrehbare Teil (21) zur Änderung einer Schaltstellung wechselweise jeweils in einer Drehrichtung mit dem Kupplungsglied (41, 141) trieblich verbindbar sind.

2. Winkelschaltbare Baueinheit für Werkzeugmaschinen nach Anspruch 1,

d a d u r c h   g e k e n n z e i c h n e t ,

daß der Schalthebel (60, 160) drehfest an einer verschwenkbar in dem stationären Teil (Säule 13), vorzugsweise in einer in dieses eingearbeiteten Freisparung (16) gelagerten Schaltwelle (71, 171) angebracht ist.

./.

3. Winkelschaltbare Baueinheit für Werkzeugmaschinen
nach Anspruch 1 oder 2,

d a d u r c h   g e k e n n z e i c h n e t ,

daß der Schalthebel (60, 160) durch an der dem Kupplungsglied (41, 141) zugekehrten Stirnfläche des mit
diesem kuppelbaren Getriebeteils (Hohlrad 40, 140)
angebrachte, den Schaltstellungen zugeordnete, vorzugsweise mit rechteckigen Flanken versehene Kuppelzähnen
(Stirnverzahnungen 46, 146) betätigbar ist.

4. Winkelschaltbare Baueinheit für Werkzeugmaschinen
nach einem oder mehreren der Ansprüche 1 bis 3,

d a d u r c h   g e k e n n z e i c h n e t ,

daß das Klinkengesperre (61, 161) durch zwei parallel
zueinander angeordnete, jeweils durch die Kraft einer
vorzugsweise in ihrer Stärke gleich stark bemessene
Feder (68, 69) radial verschiebbar und mit ihren Hinterschneidungen (64, 65) in die Ausnehmungen (52)
des Steuergliedes (51, 151) einführbare Sperrklinken
(62, 63) gebildet ist, die in Aussparungen (47, 48)
des Kupplungsgliedes (41) geführt und durch die Schaltwelle (71, 171) arretierbar sind.

5. Winkelschaltbare Baueinheit für Werkzeugmaschinen
nach Anspruch 4,

d a d u r c h   g e k e n n z e i c h n e t ,

daß zur Arretierung der Sperrklinken (62, 63) die Schaltwelle (71) mit beispielsweise durch eine Freisparung (73) gebildeten Anschlagflächen (74, 75) versehen ist, an denen die Sperrklinken (63, 64) jeweils mittels an diesen angeformter Haken (76, 77) abgestützt sind.

6. Winkelschaltbare Baueinheit für Werkzeugmaschinen nach Anspruch 4 oder 5,

d a d u r c h  g e k e n n z e i c h n e t ,

daß die auf die Sperrklinken (62, 63) einwirkenden Federn (68, 69) mit ihrem an dem stationären Teil (Säule 13) abgestützten Ende einzeln oder gemeinsam in einem Gleitschuh (70) gehalten sind.

7. Winkelschaltbare Baueinheit für Werkzeugmaschinen nach einem oder mehreren der Ansprüche 1 bis 6,

d a d u r c h  g e k e n n z e i c h n e t ,

daß der in die Kuppelzähne (Stirnverzahnung 46) des Getriebeteils (Hohlrad 40) eingreifende Teil des Schalthebels (60) in seiner Länge derart bemessen ist, daß dieser bei einer Mittelstellung zwischen zwei Kuppelzähnen außer Eingriff mit dem Getriebeteil (Hohlrad 40) verschwenkbar ist.

8. Winkelschaltbare Baueinheit für Werkzeugmaschinen nach einem oder mehreren der Ansprüche 1 bis 7,

d a d u r c h  g e k e n n z e i c h n e t ,

./.

daß der Schalthebel (60) mit einem dessen Nullage anzeigenden Signalgeber (79) versehen ist.

9. Winkelschaltbare Baueinheit für Werkzeugmaschinen nach einem oder mehreren der Ansprüche 1 bis 8,

d a d u r c h   g e k e n n z e i c h n e t ,

daß das Steuerglied (51) über eine an dem Kupplungsglied (41) beispielsweise durch eine angeformte Schulter (49) oder dgl. gebildete Anschlagfläche (50) mit diesem in einer Verstellrichtung abgestützt ist.

10. Winkelschaltbare Baueinheit für Werkzeugmaschinen nach einem oder mehreren der Ansprüche 1 bis 9,

d a d u r c h   g e k e n n z e i c h n e t ,

daß das Steuerglied (51) mittels in das verdrehbare Teil (21) eingesetzter vorzugsweise gleichmäßig über den Umfang verteilt angeordneter radial gerichteter Stifte (25), die in vorzugsweise langlochartige Ausnehmungen (53) des Steuergliedes (51) eingreifen, mit dem verdrehbaren Teil (21) drehfest verbunden ist.

11. Winkelschaltbare Baueinheit für Werkzeugmaschinen nach Anspruch 10,

d a d u r c h   g e k e n n z e i c h n e t ,

daß zur Rückführung des Kupplungsgliedes (41) mittels des an diesem abgestützten Steuergliedes (51) durch eine Drehbewegung des verdrehbaren Teils (21) die die Stifte (25) aufnehmenden Ausnehmungen (53) des Steuergliedes (51) beidseitig mit in Umfangsrichtung geneigten Auflaufschrägen (54) versehen sind.

12. Winkelschaltbare Baueinheit für Werkzeugmaschinen nach Anspruch 11,

d a d u r c h   g e k e n n z e i c h n e t ,

daß die Auflaufschrägen (54) der Ausnehmungen (53) des Steuergliedes (51) in entsprechender Weise ausgebildet sind wie die zusammenwirkenden Stirnverzahnungen (44) des Kupplungsgliedes (41), des stationären Teils (Zahnkranz 15) und des verdrehbaren Teils (Zahnkranz 22).

13. Winkelschaltbare Baueinheit für Werkzeugmaschinen nach einem oder mehreren der Ansprüche 1 bis 12,

d a d u r c h   g e k e n n z e i c h n e t ,

daß der stationäre Teil (Säule 13) mit einem Signalaufnehmer (28) und der verdrehbare Teil (Deckel 26) mit einem mit diesem zusammenwirkenden Signalgeber (29) versehen sind.

A 7891 e-s
1. Dezember 1986

FIG. 1

0230877

0230877

FIG. 2

**FIG. 3**

**FIG. 4**

**FIG. 5**

FIG. 6
4/4
0230877